# EUROPEAN PATENT APPLICATION

(11) **EP 2 366 359 A1**
(43) Date of publication of application: **21.09.2011**
(21) Application number: 10009886.2
(22) Date of filing: 22.10.2004
(51) Int. Cl.: A61C 8/00, A61C 13/00

(54) **Method for production and insertion of a dental bridge structure**

(30) Priority: 10.12.2003 SE 0303309
(62) Divisional of application: 04793829.5
(71) Applicant: Nobel Biocare Services AG, 8058 Zürich-Flughafen (CH)
(72) Inventor: Andersson, Mats, 44339 Lerum (SE); Adilstam, Frederik, 13569 Tyresö (SE); Brajnovic, Izidor, 51170 Rydal (SE)
(74) Representative: Davies, Dominic Jack

(57) **Abstract**

A system comprises a computer appliance (7) designed to receive, and to present on screen, first information (12) transmitted from identification equipment (6) and based on detection of a jaw bone structure. Modification information which can be introduced into the computer appliance shows a visual dental bridge structure applied on the jaw bone structure with associated teeth and dentine. Orientations for implants are also shown. The computer appliance produces a CAD file which is based on the first information and the modification information. The file is received in a stereolithography machine which issues second information which can be processed in the equipment (9) for production of the physical template with associated through-bores for sleeves which determine recessed positions and directions for the implants. A working model (16) is produced with the aid of the physical template which is also used for hole formation in the jaw bone structure. The invention also relates to an arrangement of a template produced by stereolithography and by means of information from the computer appliance. By means of the invention, the installation of the dental bridge on the patient can be increased at lower cost, with shorter times and a sustained degree of accuracy.

## Description

The present invention relates inter alia to a system for production and insertion of a real dental bridge structure in a real jaw bone structure by means of a number of successive function steps effected by equipment belonging to two or more different parties. The equipment comprises identification equipment, computer appliance, stereolithography equipment, equipment for production of a physical template, equipment for production of a working model in cooperation with an articulator, equipment for production of the dental bridge structure and insertion equipment for fitting the dental bridge structure on the implant in the jaw bone structure. Jaw bone structure can here relate, for example, to the structure of the upper jaw or lower jaw. The invention also relates to an arrangement of a template produced by stereolithography and by means of information from the computer appliance and used for producing, on the one hand, a dental bridge structure that can be applied on an implant in the jaw bone structure, and, on the other hand, for guiding of hole-forming means, for example a drill, for forming holes for the implants.

Systems of the type in question are already known, and reference may be made inter alia to the patent application SE 0004884-3 filed by the same Applicant.

It is also already known to use templates on the one hand for forming holes in the jaw bone structure and on the other hand for producing dental bridges. Reference may be made to the procedures used hitherto in the dental field and to the arrangements which in principle are based on quite considerable manual skill. Reference may be made to SE 0004885-0, SE 0004886-8, SE 0104431-2, SE 0104432-0, SE 0203898-2, SE 0203899-0 and SE 0203900-6.

There is a distinct need for improvements to the procedures and arrangements/auxiliaries which have been used hitherto, for example from the point of view of time and cost. Thus, for example, the production of the template should be able to be reduced by 30-50% and, inter alia, the time of use in the stereolithography machine should be able to be reduced. Despite the reduction from the point of view of time and cost, the precision of the produced products/dental bridges must remain high, as must the securing function, which must be maintained with tolerances of ca. 0.1-0.2 mm. The system and the arrangement must also be non-critical from the handling point of view so that excellent production and insertion results are achieved. In addition, certain time-consuming and cost-intensive operations must be eliminated, and, for example, the source of error in replacing a prosthesis or working model in the correct relation to the jaw bone is to be eliminated.

The invention aims to solve these problems inter alia.

In accordance with the invention, the remaining operations too must be characterized by well proven and non-critical techniques which can be dealt with and performed by parties already operating on the market. The parties must be able to cooperate in an optimal manner from the technical and financial aspect. The number of parties must be able to vary and the functions must be able to be divided into testing, insertion and handling technique, production by means of STL (sterolithography technology) and model production, and production by the dental technician. For support and possible production of one or more of the functions, higher-order parties may be used who provide a fully automatic production system for dental products, for example of the PROCERA® type.

The invention aims to solve this problem too.

That which can principally be regarded as characterizing a system according to the invention is inter alia that the computer appliance is designed to receive, and to present on screen, first information transmitted from the identification equipment and based on detection of the jaw bone structure. The computer appliance is' arranged with operating elements by means of which it is possible to visually enter modification information concerning, on the one hand, a visual dental bridge structure applied on the visual jaw bone structure with associated teeth and dentine, and, on the other hand, orientations of the implants in the visual dental bridge structure and visual jaw bone structure. Moreover, the computer appliance is arranged to produce or to cause generation of a CAD file based on the first information and the modification information and to transmit the CAD file to the stereolithography machine. The latter must be arranged to issue second information which can be processed in the equipment for production of the physical template with associated through-bores for sleeves arranged to determine the recessed positions and longitudinal directions for the implants. The physical template will on the one hand form the basis for production of the working model and, on the other hand, serve as template in a hole formation defined with the sleeves and situated in the real jaw bone structure by means of the insertion equipment (drill).

The identification and computer appliances can be assigned to a first party consisting of a party treating a patient, for example a surgeon or dentist. The stereolithography machine can be assigned to a second party. The equipment for production of template, working model and real dental bridge structure can be assigned to a third party, for example a dental technician. A fourth party with equipment of a higher order can also be involved, which fourth party can ensure information provision and/or handing or production of one or more of said functions or parts thereof. The stereolithography machine can be accessed by any of said parties. Further embodiments' of the system according to the invention are set out in the attached dependent claims concerning the system.

An arrangement according to the invention can be considered to be characterized by the fact that the template and the dental bridge structure are provided with through-holes, and the through-holes'are provided with sleeves by means of which the degrees of recessing of the implants and orientations in the implants can be determined.

In further developments of the inventive concept, the sleeves are designed with special features for being able to achieve the relevant degree of recessing in the template. In one embodiment, the sleeves can be anchored with dental cement. In a preferred embodiment, the template is arranged to reproduce or comprise a material or part which corresponds to the dentine or gum replacement over those parts which extend over the jaw bone, in which the dental bridge is intended to extend. The template is produced in said machine from plastic material with very low coefficient of shrinkage. Further illustrative embodiments are set out in the attached dependent claims concerning the novel arrangement.

By means of what has been proposed above, after fixture planning, the planning files can be converted to CAD files and SLA models (rapid prototyping) can be ordered in so-called STL technology. Part of the model can simulate the patient's upper jaw or lower jaw, while another part simulates the patient's dental prosthesis. Thereafter, the working model is produced at the dental laboratory. The template can be planned on computer using CAD and contains all data information, which means that a template can be ordered with the aid of STL technology. When the template is produced in physical form, it can be provided with sleeves for guiding the drill, implant and anchoring pins. The sleeves can be cemented in place with dental cement.

Thereafter, the template can be used as an impression for production of the working model in plaster, which is mounted in an articulator with the aid of a bite index against the dental model of the opposite jaw/jaw bone. The dental bridge can be produced on the working model obtained. The template also forms the gum replacement over the implant in the jaw bone and around the spacers in connection with production of the working model.

A presently proposed embodiment of a system and an arrangement according to the invention will be described below with reference to the attached drawings, in which
- Figure 1: shows, in block diagram form, the equipment and parties involved,
- Figure 2: shows, in side views and horizontal views, and enlarged in relation to Figure 1, parts of the function chain according to Figure 1,
- Figure 3: shows, in vertical section, two different embodiments of sleeves used in the template,
- Figure 4: shows, in vertical section, application of a sleeve in relation to an implant, and a fastening screw for the sleeve and the implant,
- Figure 5: shows, from underneath, a model of an upper jaw in which implants are applied with associated anchoring tubes and anchoring pins which extend horizontally in the dentine between the implants,
- Figure 6: shows a top view of the model' according to Figure 5, and
- Figure 7: shows a perspective view, from the side, of orientations for implants and anchoring pins in an upper jaw.

A template can be built up on computer using CAD by modifying the scanned patient prosthesis. In this way, it is possible to avoid the problem of having to produce the template at a dental laboratory, and this is an advantage since the template there is made of acrylic or of a plastic which has a certain shrinkage tendency, with deterioration of the precision as a consequence. According to the invention, the template can be mounted in the articulator with the aid of a bite index. In this way, it is possible to solve the problem of recording the bite relationships of the jaws. The template is used by the surgeon and solves the problem of placing the implant at the planned site in the patient's mouth. The template has an arrangement for its anchoring with anchoring pins which are inserted from the side between the planned implants. In this way, the template is held in place in the mouth with the aid of a bite index which is produced by the dental technician in the articulator. This solves the problem of obtaining the correct bite relationship between the dental bridge and the opposite jaw after the operation. The template contains all data for planning, so that it is not necessary to produce the bone part of the patient's jaw. This reduces the production time and costs in the stereolithography machine. The source of error in the form of having to place the prosthesis model in the correct relationship to the bone part is eliminated.

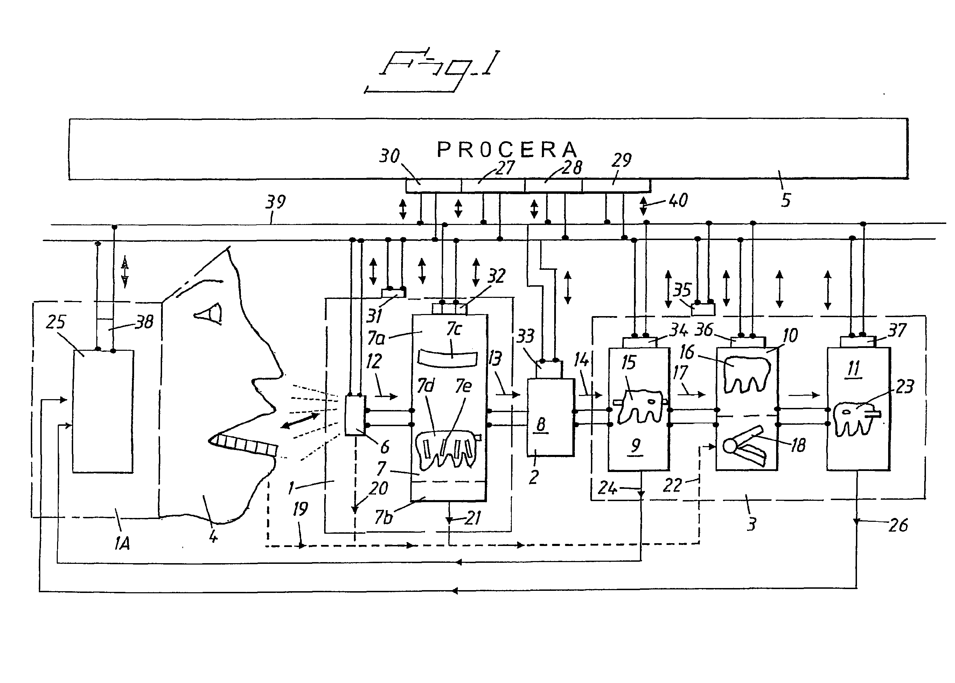

In Figure 1, a first party is indicated symbolically by 1, a second party by 2, and a third party by 3. The first party can be a surgeon, dentist, etc., who is to test and fit a dental bridge on a patient 4. The second party can be an owner of a stereolithography machine. The third party can be a dental technician. Figure 1 also indicates a fourth party represented by a fully automatic production system for dental products; in the illustrative embodiment the party 5 is designated as PROCERA®. The first party has access to identification equipment 6. In addition, the first party has access to a computer appliance 7. The stereolithography machine is symbolized by 8. The dental technician has access to equipment for production of a physical template 9, and equipment 10 for production of a working model in cooperation with an articulator function. In addition, the dental technician produces the final dental bridge in equipment 11.

The identification equipment 6 can be of a type known per se. Thus, for example, the party 1 can produce an impression in a manner known per se using conventional means. Alternatively, cameras, laser equipment, etc., can be used. The computer appliance 7 comprises, in a manner known per se, a computer screen 7a and an operating element 7b which can consist of a keyboard, voice communication unit, etc. Depending on the identification, the relevant jaw/jaw bone, in this case upper jaw, of the patient 4 can be indicated. The upper jaw structure is symbolized by 7c. In addition, the first party can modify the jaw bone structure on the screen and build up a dental crown structure applied on the jaw bone. Such a structure is indicated by 7d. For the sake of clarity, the upper jaw 7c and the complete structure 7d have been shown as two simultaneous representations. Said representations can of course be indicated one at a time. In the representation 7d, the orientations for the implants and their directions are shown by 7e. The computer appliance can operate with conventional programs (CAD programs), which are available on the market, and file management systems. The stereolithography machine can be of a type known per se and will therefore not be described in' detail here.

The scanning equipment 6 provides the computer appliance with first information 12 which represents the scanned jaw bone structure. This is exported to the computer appliance. In turn, the computer appliance generates a CAD file which is represented by 13 in Figure 1. The CAD file is received by the stereolithography machine which sets the conditions for a physical model transferred to the dental technician 9 for application of sleeves, inter alia. This transfer is represented by 14. The physical model is shown by 15. The dental technician uses the model 15 for production of a working model 16, and the transfer function between the units 9 and 10 is symbolized by 17. The production of the working model takes place in conjunction with an articulator function which is represented by 18. The bite index for the articulator function can be transferred from the patient 4, the computer appliance 7 and/or the identification equipment 6. Said transfers are represented by 19, 20 and 21. At entry to the articulator function, the bite index transfer has been symbolized by 22.

The real dental bridge 23 is produced in the equipment 11 by the party 3. From the equipment 9, the physical template 15 can be transferred to the surgeon or equivalent. This transfer is represented by 24. The party 1 can also have access to equipment symbolized by 1A. This equipment can consist of drilling equipment and insertion equipment for fitting the template and dental bridge on the patient 4. The finished dental bridge can be transferred to the first party, as has been represented by the transfer arrow 26. Formation of holes in the patient's jaw bone with the aid of the template and insertion of the finished dental bridge can take place in a manner known per se and will therefore not be described in detail here.

In accordance with Figure 1, the fourth party 5 can provide a support function or production of one or more of said function steps. This is shown in the figure where the automatic system comprises adaptation units 27, 28, 29 and 30. The equipment of the other parties can also be connected via adaptation units 31, 32, 33, 34, 35, 36, 37 and 38. The transfers can take place via general communication means 39, for example the telecommunications network, Internet, computer network, etc. The transfer functions are represented by two-direction arrows, which indicates that two-way communications exist. The arrows are represented by 40.

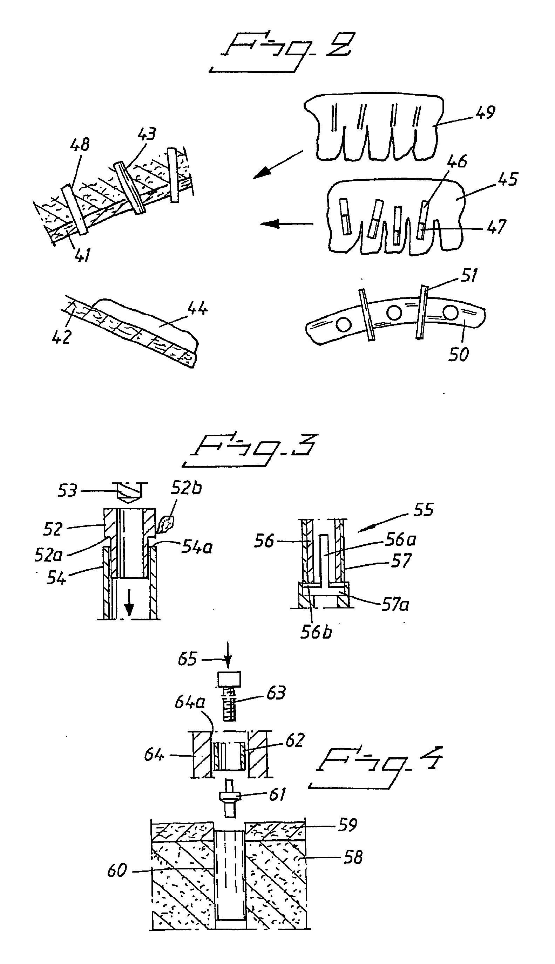

In Figure 2, an upper jaw of a patient is indicated by 41 and a lower jaw by 42. In the upper jaw, the party 1 has inserted implants 43 in which a dental bridge is to be secured. A set of teeth in the patient's lower jaw is indicated by 44 and, in accordance with what has been explained above, the bite relationship between the dental bridge to be implanted and the teeth of the lower jaw has been effected with the aid of a bite index. Reference number 45 indicates a template in accordance with the above. The template comprises, inter alia, recesses 46 for sleeves 47 used as guide members for formation of holes 48 in which the implants 43 are to be screwed or recessed. Reference number 49 indicates the finished dental bridge structure to be anchored on the implants 43 in the upper jaw. The upper jaw is also shown diagrammatically from underneath by reference number 50 in order to indicate orientations for anchoring pins 51 which extend substantially in a horizontal plane in the jaw structure. Figure 3 shows a first embodiment of a sleeve 52 which is used for guiding a drill 53 for forming the implant hole 48. The sleeve has a stop edge 52a which can cooperate with the template 54 via a stop surface 54a on the latter. Figure 3 also shows a second embodiment 55 of a sleeve 56 which is provided with slits 56a. The template 57 in this case has an internal recess 57a into which a snapfit flange 56b on the sleeve can snap when the sleeve assumes its final position in the template 57. A click noise function can be provided.

Figure 4 shows an implant 60 applied in a jaw bone and dentine 59. The implant can cooperate with an attachment part 61 over which a sleeve 62 in accordance with the above can be engaged. The components can be held together with a retaining screw 63. The sleeve 62 is mounted in the template or dental bridge part which is indicated by 64. The parts' are shown in the disassembled state for the sake of clarity. The parts can be joined together in the direction of the arrow 65. A through-hole in the template 64 is shown by 64a. Cement which is used for securing the sleeve to the template is shown symbolically by 52b.

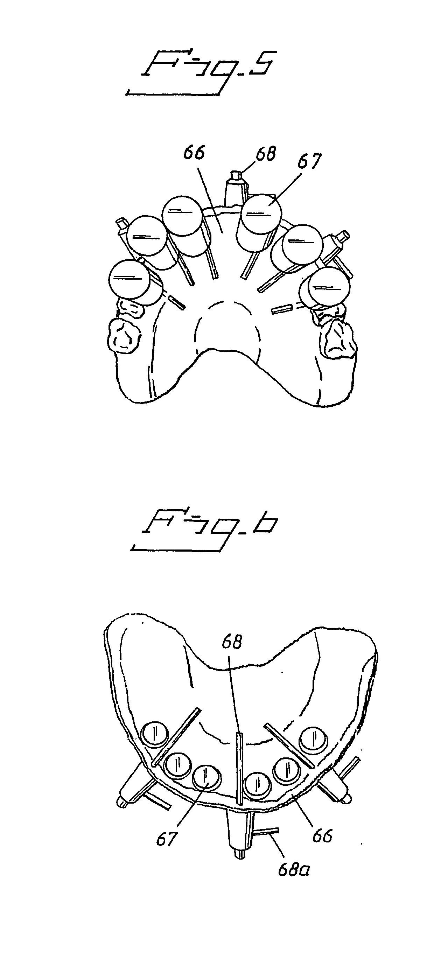

A structural configuration of a physical template is indicated by 66. In the present case, implants 67 are screwed securely to the template, compare with Figure 4. The pins for anchoring are shown by 68. Figure 6 shows the template according to Figure 5 from underneath. The anchoring pins 68 are designed with manual actuating members by means of which the pins can be screwed through the jaw bone in question. The figure shows that the anchoring pins extend between the implants 67.

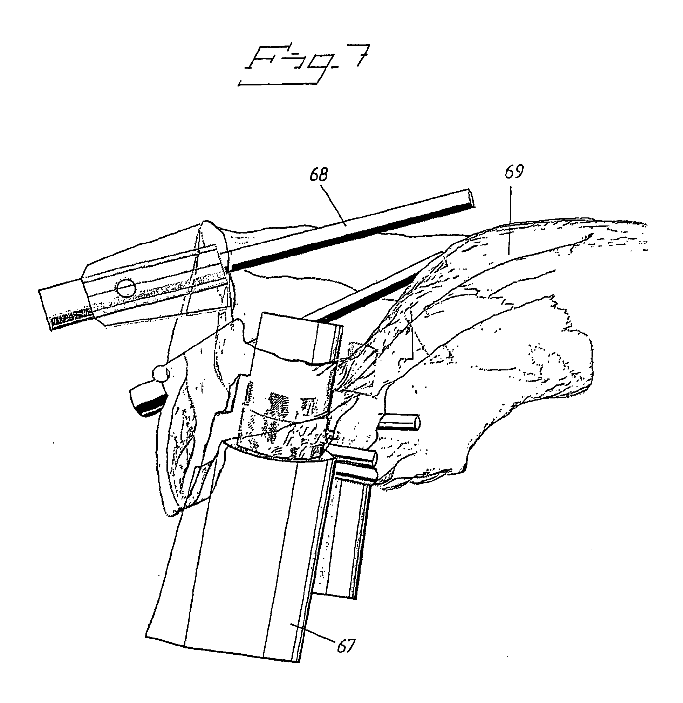

Figure 7 shows, from the side and in perspective, the template according to Figures 5 and 6 applied to a jaw bone 69.

### Embodiments:

A system for production and insertion of a real dental bridge structure (23) in a real jaw bone structure by means of a number of successive function steps effected by equipment belonging to two or more different parties, said equipment comprising identification equipment (6), computer appliance (7a, 7b), sterolithography equipment (8), equipment for production of a physical template (15), equipment for production of a working model (16) in cooperation with an articulator (18), equipment for production of the dental bridge structure and insertion equipment (25) for fitting the dental bridge structure on the implant in the jaw bone structure, wherein the computer appliance is designed to receive, and to present on screen, first information transmitted from the identification equipment and based on detection of the jaw bone structure, wherein the computer. appliance is arranged with operating elements by means of which it is possible to visually enter modification information concerning, on the one hand, a visual dental bridge structure applied on the visual jaw bone structure with associated teeth and dentine (gum), and, on the other hand, orientations of the implants in the visual dental bridge structure and visual jaw bone structure, wherein the computer appliance is arranged to produce a CAD file (13) based on the first information and the modification information and to transmit the CAD file to the stereolithography machine, wherein the stereolithography machine is arranged to issue second information which can be processed in the equipment for production. of the physical template with associated through-bores for sleeves arranged to determine the recessed positions and longitudinal directions for the implants, and wherein the physical template (15) on the one hand forms the basis for production of the working model and, on the other hand, serves as template in a hole formation defined with the sleeves and effected in the real jaw bone structure by means of the insertion equipment.

The identification and computer appliances (6, 7a, 7b) may be assigned to a first party (1) consisting of a party treating a patient, for example a surgeon, wherein the stereolithography machine may be assigned to a second party (2), and wherein the equipment for production of template, working model and real dental bridge structure may be assigned to a third party (3), for example a dental technician.

The appliances assigned to the various parties can be connected to equipment of a higher order belonging to a fourth party (5) for information provision and/or handling or production of one or more of said functions or parts thereof.

The equipment for production of a working model (16) in cooperation with an articulator (18) may be arranged to receive bite index information (22) from the identification equipment, the computer appliance and/or the equipment of higher order.

The computer appliance (7a, 7b) and/or the equipment for production of a physical template (15) may be arranged to indicate positions between the implants for fixing members, for example fixing pins, which extend through the jaw bone structure for retention in or on patient (4) in the hole formation for implants.

An arrangement of a template produced by stereolithography (14) and by means of information from computer appliance (7a, 7b) and used for producing, on the one hand, a dental bridge structure that can be applied on an implant in the jaw bone structure, and, on the other hand, for guiding of hole-forming means (drill) (25) for forming holes for the implants (7e), wherein the template (15) and the dental bridge structure (23) are provided with through-holes, and wherein the through-holes are provided with sleeves by means of which the degrees of recessing of the implants and orientations in the implants can be determined.

The sleeves may be arranged with first members (52a) which determine their degree of recessing in the template and which, in the recessed position, cooperate with corresponding second members (54a) in the template. The first members (52a) may consist of outwardly projecting flanges and the second members (54a) may consist of stop surfaces.

The sleeves may be arranged with resilient members (56b) which determine their degree of recessing in the template and are designed to be able to be snapped into an internal recess (57a) in the final position of the sleeves. The resilient members (56b) may be arranged to emit a click sound when the respective sleeve reaches its final position in the template.

The respective sleeve (62) can be anchored or locked by means of cement (52b).

First sleeves (52) may be arranged for guiding the drill and implant or determining directions in which the drill (s) will operate in the respective implants, and second sleeves (51) for anchoring members or pins which are designed to extend horizontally through the jaw bone.

The template (15) may be arranged to reproduce or comprise a material or part which corresponds to the dentine or gum replacement over those parts which extend over the jaw bone, in which, the dental bridge is intended to extend. The template may be made of plastic material with a low coefficient of creep.

The template may have a configuration which, precisely or clearly fixes the position of the template on the jaw bone (58, 59) in order to permit hole formations, for the implants, which very accurately match the hole formations in the produced dental bridge (23), and the accuracy can be 0.1-0.2 mm.

The finished dental bridge (23) may be designed to cooperate with teeth (44) in the opposite jaw bone with the aid of bite index added to the template and dental bridge.

Said material or part of the template which corresponds to the dentine or gum replacement may be designed to reduce the template production time in a stereolithography machine (8), inter alia, by 30-50% compared to the case where the working model is replaced in the correct relation to the bone part.

The invention is not limited to the embodiment described above by way of example, and instead it can be modified within the scope of the attached patent claims.

## Claims

1. A dental method, wherein
a template is produced by stereolithography (14) and by means of information from computer appliance (7a, 7b) and used for producing, on the one hand, a dental bridge structure that can be applied on an implant in the jaw bone structure, and, on the other hand, for guiding of hole-forming means (25) for forming holes for the implants (7e), wherein the template (15) and the dental bridge structure (23) are provided with through-holes, and wherein the method further comprises
mounting the template in an articulator with the aid of a first bite index, and
producing a second bite index in the articulator, wherein the template can be held in place in the mouth of a patient with the aid of the second bite index.

2. A method according to claim 1, wherein the through-holes are provided with sleeves by means of which the degrees of recessing of the implants and orientations in the implants can be determined.

3. A method according to claim 1 or 2, wherein mounting the template in an articulator with the aid of a first bite index includes
mounting a working model in the articulator with the aid of the first bite index, and
placing the template on the working model.

4. A method according to claim 3, wherein the working model is in plaster and produced using the template as an impression, and wherein the working model is mounted in the articulator with the aid of the first bite index against a dental model of the opposite jaw or jaw bone.

5. A method as claimed in claim 2, wherein the sleeves are arranged with first members (52a) which determine their degree of recessing in the template and which, in the recessed position, cooperate with corresponding second members (54a) in the template.

6. A method as claimed in patent claim 5, wherein the first members (52a) consist of outwardly projecting flanges and the second members (54a) consist of stop surfaces.

7. A method as claimed in claim 2, wherein the sleeves are arranged with resilient members (56b), and wherein the method comprises snapping the resilient members into an internal recess (57a) of the template.

8. A method as claimed in claim 2, wherein the respective sleeve (62) can be anchored or locked by means of cement (52b).

9. A method as claimed in claim 2, wherein first sleeves (52) are arranged for guiding the drill and implant or determining directions in which the drill (s) will operate in the respective implants, and second sleeves (51) for anchoring members or pins which are designed to extend horizontally through the jaw bone.
